# EUROPEAN PATENT SPECIFICATION

(11) **EP 2 921 348 B1**
(45) Date of publication and mention of the grant of the patent: **27.03.2019**
(21) Application number: 15156849.0
(22) Date of filing: 27.02.2015
(51) Int. Cl.: B60Q 1/00, F21S 41/19, F21S 41/143, F21S 41/147, F21S 41/24, F21S 41/39, F21S 41/32, F21S 41/40, F21S 43/19, F21S 43/14, F21S 43/239, F21S 43/243, F21S 43/247, F21S 43/40, F21S 45/47, B62J 6/02

(54) **Headlight for vehicle**
Fahrzeugscheinwerfer
Phare de véhicule

(30) Priority: 18.03.2014 JP 2014055048
(43) Date of publication of application: 23.09.2015
(73) Proprietor: HONDA MOTOR CO., LTD., Tokyo, 107-8556 (JP)
(72) Inventor: Watanabe, Kazuki, Saitama, 351-0193 (JP)
(74) Representative: Beder, Jens

(56) References cited:
- EP-A1- 2 159 481
- WO-A1-2012/083331
- WO-A1-2012/084481
- WO-A1-2013/073419
- WO-A1-2013/075157
- JP-A- 2011 034 729
- JP-A- 2011 124 111
- JP-A- 2012 064 533
- US-A1- 2008 062 709
- US-A1- 2012 281 424
- US-A1- 2013 343 074

## Description

The present invention relates to a headlight for a vehicle, and relates more specifically to a headlight for a vehicle storing a headlight light source and an auxiliary light source in a single housing.

From the past, a headlight for a vehicle has been known which stores a headlight light source including headlights for low beam/high beam and an auxiliary light source that performs light emission assisting the headlight light source in a single housing.

In JP-A No. 2013-178904, a headlight for a vehicle is disclosed in which LEDs (light emitting diodes) are applied to a headlight light source and auxiliary light sources respectively. In this head light for a vehicle, LEDs for the headlight light source forming the low beam and high beam are mounted respectively on the upper and lower surfaces of an LED base plate disposed generally horizontally. Also, on the rear side of the base plate, a semi-spherical reflector for the headlight light source is disposed, and the auxiliary light sources formed of eight pieces of LED are disposed around the reflector. In addition to that such auxiliary light sources add a visual effect different from that of the irradiation light of the headlight light source and improve viewability of the headlight, they can be lit individually and can be used as a position light.

However, in the technology described in Patent Literature 1, there was a problem that the whole headlight became large even when LEDs were used for both of the headlight light source and the auxiliary light sources because the auxiliary light sources were disposed in a ring shape outside the reflector.

WO 2013/075157 A1 discloses a headlight for a vehicle according to the preamble of claim 1.

An object of the present invention is to provide a headlight for a vehicle which addresses the problems of the above related art and can avoid that the headlight becomes large while including auxiliary light sources having high visual effect.

To attain this object, the first aspect of the present invention provides a headlight (1) for a vehicle including a housing of a semi-spherical shape, headlight light sources (20, 21) and auxiliary light sources (9) with a reflector (10) of a generally semi-spherical shape that reflects irradiation light of the headlight light sources (20, 21) toward vehicle body front being stored inside the housing (3), in which all of the headlight light sources (20, 21) and the auxiliary light sources (9) are formed of LEDs, a base plate (5) that mounts the headlight light sources (20, 21) is disposed generally horizontally in front of the reflector (10), and the auxiliary light sources (9) are disposed on a front end surface (5F) on the vehicle body front side of the base plate (5).

Also, the headlight for a vehicle further including a lens (12) that covers an opening (10a) on the vehicle body front side of the reflector (10) and allows irradiation light of the headlight light sources (20, 21) and the auxiliary light sources (9) to permeate therethrough, in which light guide members (7) that guide irradiation light of the auxiliary light sources (9) to an optional direction are arranged at a position between the auxiliary light sources (9) and the lens (12) .

Further on, the light guide members (7) are long members having a rectangular cross section.

A plurality of the auxiliary light sources (9) are disposed so as to be arrayed laterally in a row on an end surface of the base plate (5), and the light guide members (7) are arranged corresponding to the respective auxiliary light sources (9) and are disposed in the orthogonal direction with respect to the base plate (5) .

Notches (8) that reflect an irradiation light of the auxiliary light sources (9) to the longitudinal direction of the light guide members (7) are formed in the light guide members (7) at a position on the vehicle body front side of the auxiliary light sources (9).

Also, the second aspect provides the headlight for a vehicle in which the lens (12) is configured to have a curved surface, and a front end surface (5F) of the base plate (5) and the light guide members (7) are formed respectively so as to curve to match the lens (12).

Also, the third aspect provides the headlight for a vehicle in which the headlight light sources (20, 21) include an LED (20) for low beam and an LED (21) for high beam and are disposed on one surface side (5U) and the other surface side (5L) of the base plate (5) respectively, and shield covers (6, 11) that prevent irradiation light of the LED (20) for low beam and the LED (21) for high beam from being leaked directly to the vehicle body front side are arranged on the vehicle body front side of the LED (20) for low beam and the LED (21) for high beam.

According to the first aspect, because all of the headlight light sources and the auxiliary light sources are formed of LEDs, the base plate that mounts the headlight light sources is disposed generally horizontally in front of the reflector, and the auxiliary light sources are disposed on the front end surface on the vehicle body front side of the base plate, the auxiliary light sources can be disposed inside the reflector without affecting the irradiation light by the headlight light sources. Thus, the housing of the headlight for a vehicle can be avoided from becoming large compared to a configuration the auxiliary light sources are disposed outside the reflector. Also, because the auxiliary light sources are disposed on the front end surface of the base plate, the disposal position of the auxiliary light sources can be prevented from becoming noticeable, and the design freedom of the luminous intensity distribution structure by the auxiliary light sources can be increased.

Further on, because the lens that covers the opening on the vehicle body front side of the reflector and allows the irradiation light of the headlight light sources and the auxiliary light sources to permeate therethrough is arranged and the guide members that guide the irradiation light of the auxiliary light sources to an optional direction are arranged at a position between the auxiliary light sources and the lens, the irradiation light of the auxiliary light sources can be guided to an optional direction and a peculiar visual effect can be imparted while preventing the position of the auxiliary light sources from becoming noticeable.

Also because the light guide members are long members having a rectangular cross section, the irradiation light of the auxiliary light sources can be guided to a position apart from the auxiliary light sources while minimizing the effect of the light guide members on the irradiation light of the headlight light sources.

Because a plurality of the auxiliary light sources are disposed so as to be arrayed laterally in a row on the end surface of the base plate and the light guide members are arranged corresponding to the respective auxiliary light sources and are disposed in the orthogonal direction with respect to the base plate, a vertical strip pattern becoming luminous by the auxiliary light sources in a vehicle body front view of the headlight can be formed.

Because the notches that reflect the irradiation light of the auxiliary light sources to the longitudinal direction of the light guide members are formed in the light guide members at a position on the vehicle body front side of the auxiliary light sources, by reflection of the irradiation light of the auxiliary light sources toward the vehicle body front by the notches, the position of the auxiliary light sources becomes less conspicuous, and the irradiation light of the auxiliary light sources can reach the end of the light guide members.

According to the second aspect, because the lens is configured to have a curved surface and the front end surface of the base plate and the light guide members are formed respectively so as to curve to match the lens, the base plate and the light guide members can be disposed adjacently to the lens and the headlight can be made compact.

According to the third aspect, because the headlight light sources include the LED for low beam and the LED for high beam and are disposed on one surface side and the other surface side of the base plate respectively and the shield covers that prevent the irradiation light of the LED for low beam and the LED for high beam from being leaked directly to the vehicle body front side are arranged on the vehicle body front side of the LED for low beam and the LED for high beam, a vacant space for allowing the auxiliary light sources to emit light to the front side of the base plate can be arranged while preventing the irradiation light from the headlight light sources from being leaked toward the vehicle front side directly by arranging the shield covers that are used exclusively for the LED for low beam and the LED for high beam respectively.
Fig. 1 is a perspective view of the headlight for a vehicle in relation with an embodiment of the present invention.
Fig. 2 is an exploded perspective view of the headlight.
Fig. 3 is a front view of the headlight.
Fig. 4 is a left side view of the headlight.
Fig. 5 is a cross-sectional view taken from line V-V of Fig. 3.
Fig. 6 is a cross-sectional view taken from line VI-VI of Fig. 3.

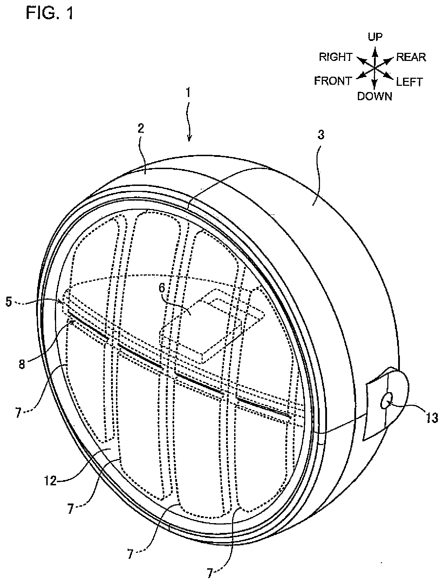

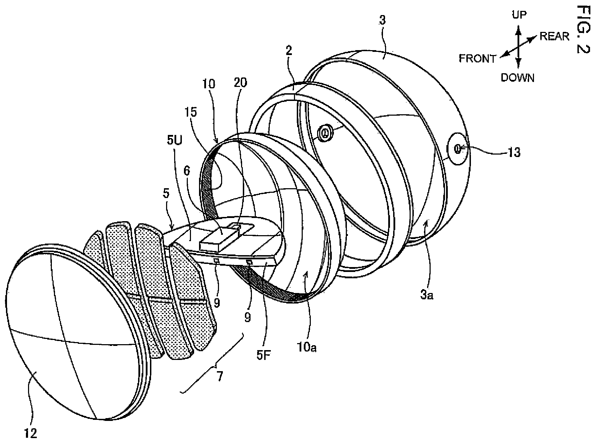

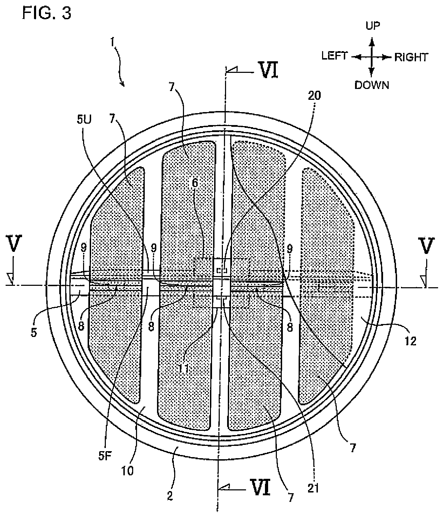

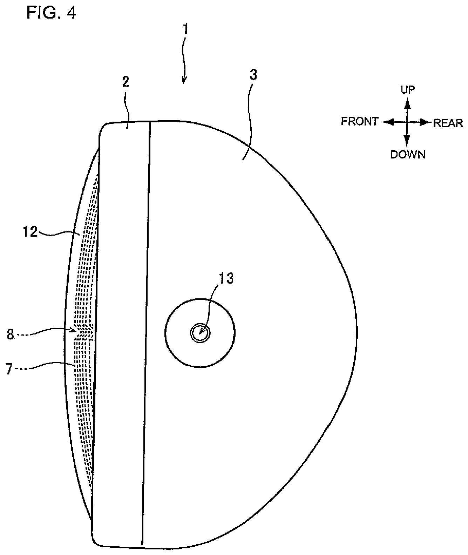

Below, preferable embodiments of the present invention will be described in detail referring to the drawings. Fig. 1 is a perspective view of a headlight 1 for a vehicle (may be hereinafter shown merely as a headlight 1) in relation with an embodiment of the present invention. Also, Fig. 2 is an exploded perspective view of the headlight 1, Fig. 3 is a front view of the headlight 1, and Fig. 4 is a left side view of the headlight 1.

The headlight 1 is constituted by storing the light sources and a reflector 10 in a space surrounded by a housing 3 of a semi-spherical shape and a lens 12 that is located on the vehicle body front side. The headlight 1 is attached to the vehicle body front part of a motorcycle and the like by supporting bosses 13 formed in the housing 3. In assembling the headlight 1, each component is stored in an opening 3a of the housing 3, the opening 3a is capped by the lens 12, and a ring member 2 is engaged therewith using a fixing member (not shown).

The reflector 10 stored in the housing 3 is also formed into a semi-spherical shape having an opening 10a, and the opening 10a of the reflector 10 is also capped by engaging the housing 3 and the lens 12 each other. The housing 3 can be formed of a hard resin of black or the like, and the lens 12 can be formed of a colorless and transparent acrylic resin and the like.

The light source of the headlight 1 is formed of headlight light sources by an LED 20 for low beam and an LED 21 for high beam and auxiliary light sources 9 by plural LEDs (four pieces in the present embodiment) performing auxiliary light emission, and all of them are mounted on a base plate 5 having a thick plate shape. The base plate 5 is disposed inside the housing 3 so as to become generally horizontal when the headlight 1 is attached to the vehicle body.

In the present embodiment, it is configured that the LED 20 for low beam is lit when the low beam is selected and both of the LED 20 for low beam and the LED 21 for high beam are lit when the high beam is selected. The irradiation light of the headlight light source is reflected to the vehicle body front side by the reflector 10.

In the meantime, when the auxiliary light sources 9 are lit, entirety of light guide members 7 disposed adjacently to the rear surface side (the surface on the vehicle body rear side) of the lens 12 emits the light. This light emission part forms four vertical stripe patterns stored inside the outer edge of the lens 12 in the vehicle body front view (refer to Fig. 3), and gives a peculiar appearance to the irradiation light of the headlight 1. The auxiliary light sources 9 can be lit simultaneously with the headlight light sources 20, 21 or alone.

The headlight light sources 20, 21 and the auxiliary light sources 9 are mounted on respective parts of the base plate 5 that is disposed generally horizontally in front of the reflector 10. The base plate 5 is formed into a generally semi-circle shape in a plan view so as to tightly adhere to the bottom surface of the opening 10a of the reflector 10 which becomes the reflecting surface reflecting the irradiation light of the headlight light sources 20, 21 to the vehicle body front side. The body of the reflector 10 is formed of a hard resin and the like, and the reflecting surfaces of the headlight light sources 20, 21 can be formed by plating or metal vapor treatment.

The LED 20 for low beam is mounted on one surface side 5U on the vehicle body upper side of the base plate 5, and the LED 21 for high beam is mounted on the other surface side 5L on the vehicle body lower side of the base plate 5. On the vehicle body front side of two LEDs 20, 21, rectangular light shield covers 6, 11 for preventing the irradiation light thereof from being directly leaked to the vehicle body front side are disposed respectively. Also, the light shield covers 6, 11 may be formed into a shape of splitting a circular cylinder into two in order to obtain required light shielding function and not to become conspicuous in being viewed from the outside.

The present invention is featured that the auxiliary light sources 9 are disposed on the front end surface 5F on the vehicle body front side of the base plate 5. Thus, the auxiliary light sources 9 can be stored inside the reflector 10 without affecting the irradiation light by the headlight light sources 20, 21, and the housing 3 can be avoided from becoming large caused by arranging the auxiliary light sources 9. Also, because the auxiliary light sources 9 are disposed on the front end surface 5F of the base plate 5, the disposal position of the auxiliary light sources 9 can be prevented from becoming conspicuous, and the design freedom of the luminous intensity distribution structure by the auxiliary light sources 9 can be increased.

Normally, as the structure of the light shield cover, to dispose a plate-like member having a width in the vertical direction corresponding to both of the headlight light sources 20, 21 on the front side of the base plate 5 is conceivable, however, in the present invention, because the light shield covers 6, 11 are separately disposed on the upper and lower surfaces of the base plate 5 and a vacant space is formed in front of the base plate 5, the auxiliary light sources 9 can be arranged.

The light guide members 7 having a long shape are disposed adjacently to the front end surface 5F of the base plate 5, and have a function of guiding the irradiation light of the auxiliary light sources 9 in the vehicle body vertical direction. In the center in the vertical direction of the light guide members 7, notches 8 of a wedge shape for effectively guiding the irradiation light of the auxiliary light sources 9 in the vehicle body vertical direction are arranged.

The notches 8 are arranged on the vehicle body front side of positions corresponding to the auxiliary light sources 9, thereby the irradiation light toward the vehicle body front by the auxiliary light sources 9 is reflected to the longitudinal direction of the light guide members 7, the positions of the auxiliary light sources 9 become less conspicuous, and the irradiation light of the auxiliary light sources 9 can reach the end of the light guide members 7.

Also, the light guide members 7 have a rectangular cross section, and thereby the influence of the light guide members 7 on the irradiation light of the headlight light sources 20, 21 is minimized. The light guide members 7 can be formed of a colorless and transparent or colored and transparent acrylic resin and the like.

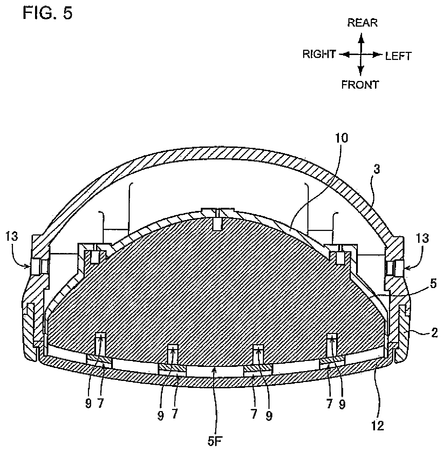

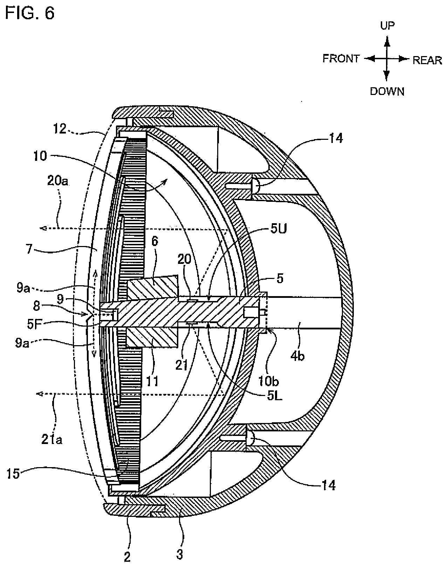

Fig. 5 is a cross-sectional view taken from line V-V of Fig. 3. Also, Fig. 6 is a cross-sectional view taken from line VI-VI of Fig. 3. The auxiliary light sources 9 are mounted on the bottom part of the rectangular holes formed in the front end surface 5F of the base plate 5. Also, the lens 12 is formed into a spherical curved surface, and the base plate 5 and the light guide members 7 are formed into a shape matching this curved surface.

The base plate 5 is formed into such a shape in the plan view of Fig. 5 that the edge on the vehicle body rear side is curved along the reflecting surface of the reflector 10 and that the front end surface 5F on the vehicle body front side is curved matching the curved surface of the lens 12. The light guide members 7 are disposed so as to be embraced by the base plate 5 and the lens 12 without leaving a gap therebetween.

Although the light guide members 7 basically have a rectangular cross section so as not to hamper permeation of the reflected light of the headlight light sources 20, 21, the entire side surfaces thereof are made to be parallel in the vehicle body front/rear direction, and it is configured that the side surfaces of the light guide members 7 are not visible in the front view of the headlight 1. The notch 8 of the light guide member 7 is formed on the surface on the vehicle body front side, and has the maximum depth of approximately a half of the thickness of the light guide member 7. As further example, which is not part of the claimed invention, the notches 8 may be arranged also on the surface on the vehicle body rear side of the light guide members 7.

Referring to Fig. 6, the reflector 10 is fixed to the inside of the housing 3 by fastening members 14 such as tapping screws and the like. Also, to the rear part of the base plate 5, a hollow heat transmitting member 4b that passes through a through hole 10b arranged in the bottom part of the reflector 10 is connected. Inside the heat transmitting member 4b, wirings (not shown) that supply electric power to respective light sources are made to pass through. Further, it may also be configured that a heat sink is attached to this heat transmitting member 4b and the heat accompanying light emission by the headlight light sources 20, 21 is radiated through the base plate 5.

Irradiation light 20a of the LED 20 for low beam mounted on one surface side 5U that is the upper surface of the base plate 5 is reflected to the vehicle body front side by the reflecting surface of the upper half of the reflector 10 that is separated vertically by the base plate 5. On the other hand, irradiation light 21a of the LED 21 for high beam mounted on the other surface side 5L that is the lower surface of the base plate 5 is reflected to the vehicle body front side by the reflecting surface of the lower half. Also, with respect to the attaching surfaces of the light shield covers 6, 11, due to the difference in the luminous intensity distribution characteristic thereof, different inclination angle is given to the upper one and the lower one.

Irradiation light 9a of the auxiliary light sources 9 that are mounted on the front end surface 5F of the base plate 5 is guided to the vertical directions of the light guide members 7 by the reflecting surfaces formed by the notches 8 of the wedge shape. Also, at the edge of the opening 10a of the reflector 10, a lens cut section 15 formed of a number of grooves oriented in the vehicle body front/rear direction is arranged. By this lens cut section 15, the irradiation light having reached the end of the light guide members 7 is diffused, and the effect to the irradiation light of the headlight light sources 20, 21 is reduced.

Also, the structure of the headlight for a vehicle, the shape and structure of the housing and the reflector, the shape and structure of the base plate, the number of pieces and the shape of the headlight light sources and the auxiliary light sources, the shape and material of the light guide members, the shape and arrangement of the notches, the shape and arrangement of the light shield covers, and so on are not limited to the embodiments described above, and various alterations in frame of the attached claims are possible. For example, the cross-sectional shape of the light guide members is made generally square in order to dispose more pieces of the light guide members. Also, the light guide member may also be formed integrally with the lens. Further, the notches of the light guide members may be changed optionally according to the degree of the curvature of the lens and the light guide members. The headlight for a vehicle in relation with the present invention can be applied to various vehicles such as saddle-ride type three- and four-wheeled vehicles and so on in addition to a motorcycle.

### Reference Signs List

1... Headlight for a vehicle
2... Ring member
3... Housing
5... Base plate
5F... Front end surface of base plate
5U... One surface side of base plate
5L... The other surface side of base plate
6, 11... Light shield cover
7... Light guide member
8... Notch
9... Auxiliary light source
10... Reflector
12... Lens
20... LED for low beam (headlight light source)
21... LED for high beam (headlight light source)
9a... Irradiation light of auxiliary light sources
20a... Irradiation light of LED for low beam
21a... Irradiation light of LED for high beam

## Claims

1. A headlight (1) for a vehicle, the headlight comprising:
a housing (3) of a semi-spherical shape;
headlight light sources (20, 21); and
auxiliary light sources (9), with
a reflector (10) of a generally semi-spherical shape that reflects irradiation light of the headlight light sources (20, 21) toward vehicle body front when the headlight (1) is installed to the vehicle, being stored inside the housing (3), wherein
all of the headlight light sources (20, 21) and the auxiliary light sources (9) are formed of LEDs,
a base plate (5) that mounts the headlight light sources (20, 21) is disposed generally horizontally in front of the reflector (10),
the auxiliary light sources (9) are disposed on a front end surface (5F) on the vehicle body front side of the base plate, when the headlight (1) is installed to the vehicle, (5), the headlight (1) comprising
a lens (12) that covers an opening (10a) on the vehicle body front side of the reflector (10), when the headlight (1) is installed to the vehicle, and allows irradiation light of the headlight light sources (20, 21) and the auxiliary light sources (9) to permeate therethrough,
light guide members (7) that guide irradiation light of the auxiliary light sources (9) to an optional direction are arranged at a position between the auxiliary light sources (9) and the lens (12),
**characterized in**
**that** a plurality of the auxiliary light sources (9) are disposed so as to be arrayed laterally in a row on an end surface of the base plate (5),
**that** the light guide members (7) are long members having a rectangular cross section arranged corresponding to the respective auxiliary light sources (9) and are disposed in an orthogonal direction with respect to the base plate (5), and
**that** notches (8) that reflect an irradiation light of the auxiliary light sources (9) to the longitudinal direction of the light guide members (7) are formed in the light guide members (7) on the vehicle body front side of positions corresponding to the auxiliary light sources (9), when the headlight (1) is installed to the vehicle.

2. The headlight for a vehicle according to claim 1, wherein
the lens (12) is configured to have a curved surface, and a front end surface (5F) of the base plate (5) and the light guide members (7) are formed respectively so as to curve to match the lens (12).

3. The headlight for a vehicle according to any one of claims 1 to 2, wherein
the headlight light sources (20, 21) include an LED (20) for low beam and an LED (21) for high beam and are disposed on one surface side (5U) and the other surface side (5L) of the base plate (5) respectively, and
shield covers (6, 11) that prevent irradiation light of the LED (20) for low beam and the LED (21) for high beam from being leaked directly to the vehicle body front side are arranged on the vehicle body front side of the LED (20) for low beam and the LED (21) for high beam, when the headlight (1) is installed to the vehicle.

## Patentansprüche

1. Scheinwerfer (1) für ein Fahrzeug, wobei der Scheinwerfer umfasst:
ein Gehäuse (3) einer halbkugeligen Form;
Scheinwerfer-Lichtquellen (20, 21); und
Hilfs-Lichtquellen (9), mit
einem Reflektor (10) einer im wesentlichen halbkugeligen Form, welcher Strahlungslicht der Scheinwerfer-Lichtquellen (20, 21) zu einer Fahrzeugvorderseite hin reflektiert, wenn der Scheinwerfer (1) an einem Fahrzeug montiert ist, wobei der Reflektor (10) innerhalb des Gehäuses (3) aufbewahrt ist, wobei
jede der Scheinwerfer-Lichtquellen (20, 21) und der Hilfs-Lichtquellen (9) aus LEDs gebildet ist,
eine Grundplatte (5), welche die Scheinwerfer-Lichtquellen (20, 21) trägt, die im Wesentlichen vor dem Reflektor (10) angeordnet ist,
die Hilfs-Lichtquellen (9) an einer vorderen Endfläche (5F) an der Fahrzeugvorderseite der Grundplatte (5) montiert sind, wenn der Scheinwerfer (1) an dem Fahrzeug montiert ist, wobei der Scheinwerfer (1) umfasst
eine Linse (12), welche eine Öffnung (10A) an der Fahrzeugkarosserievorderseite des Reflektors (10) abdeckt, wenn der Scheinwerfer (1) an dem Fahrzeug montiert ist, und durch die Strahlungslicht der Scheinwerfer-Lichtquellen (20, 21) und der Hilfs-Lichtquellen (9) hindurchdringt,
Lichtleitelemente (7), die Strahlungslicht der Hilfs-Lichtquellen (9) zu einer optionalen Richtung leiten, an einer Stelle angeordnet sind, die zwischen den Hilfs-Lichtquellen (9) und der Linse (12) liegt,
**dadurch gekennzeichnet,**
**dass** eine Mehrzahl von Hilfs-Lichtquellen (9) so angeordnet ist dass sie seitlich in einer Reihe an einer Endfläche der Grundplatte (5) geordnet sind,
**dass** die Lichtleitelemente (7) längliche Elemente sind, die einen rechteckigen Querschnitt haben, der entsprechend den jeweiligen Hilfs-Lichtquellen (9) angeordnet ist und die in einer orthogonalen Richtung in Bezug auf die Grundplatte (5) angeordnet sind, und
**dass** Kerben (8), die das Strahlungslicht der Hilfs-Lichtquellen (9) in die Längsrichtung der Lichtleitelemente (7) reflektieren, in den Lichtleitelementen (7) an einer Fahrzeugkarosserievorderseite an Positionen gebildet sind, die zu den Hilfs-Lichtquellen (9) korrespondieren, wenn der Scheinwerfer (1) in dem Fahrzeug montiert ist.

2. Scheinwerfer für ein Fahrzeug gemäß Anspruch 1, wobei
die Linse (12) eingerichtet ist, eine gekrümmte Fläche zu haben, und eine vordere Endfläche (5F) der Grundplatte (5) und die Lichtleitelemente (7) jeweils so gebildet sind, dass ihre Krümmung zu der Linse (12) passt.

3. Scheinwerfer für ein Fahrzeug gemäß irgendeinem der Ansprüche 1 bis 2, wobei die Scheinwerfer-Lichtquellen (20, 21) eine LED (20) für das Abblendlicht und eine LED (21) für das Fernlicht aufweisen und an einer Seitenfläche (5U) und der anderen Seitenfläche (5L) der Grundplatte (5) angeordnet sind, und
Abschirmabdeckungen (6, 11), die Strahlungslicht der LED (20) des Abblendlichts und der LED (21) des Fernlichts davon abhalten direkt zu der Fahrzeugkarosserievorderseite auszutreten, an der Fahrzeugkarosserievorderseite der LED (20) des Abblendlichts und der LED (21) des Fernlichts angeordnet sind, wenn der Scheinwerfer (1) an dem Fahrzeug montiert ist.

## Revendications

1. Phare (1) pour un véhicule, le phare comprenant :
un boîtier (3) de forme semi-sphérique ;
des sources de lumière de phare (20, 21) ; et
des sources de lumière auxiliaires (9), avec :
un réflecteur (10) de forme généralement semi-sphérique qui reflète la lumière de rayonnement des sources de lumière de phare (20, 21) vers l'avant de la carrosserie de véhicule lorsque le phare (1) est installé sur le véhicule, étant stocké à l'intérieur du boîtier (3), dans lequel :
toutes les sources de lumière de phare (20, 21) et les sources de lumière auxiliaires (9) sont formées avec des diodes électroluminescentes,
une plaque de base (5) qui permet de monter les sources de lumière de phare (20, 21), est disposée généralement horizontalement en face du réflecteur (10),
les sources de lumière auxiliaires (9) sont disposées sur une surface d'extrémité avant (5f) sur le côté avant de la carrosserie de véhicule de la plaque de base (5), lorsque le phare (1) est installé sur le véhicule,
le phare (1) comprenant :
une lentille (12) qui recouvre une ouverture (10a) du côté avant de la carrosserie de véhicule du réflecteur (10), lorsque le phare (1) est installé sur le véhicule, et permet à la lumière de rayonnement des sources de lumière de phare (20, 21) et des sources de lumière auxiliaires (9) de s'infiltrer à travers cette dernière,
des éléments de guidage de lumière (7) qui guident la lumière de rayonnement des sources de lumière auxiliaires (9) dans une direction facultative sont agencés dans une position entre les sources de lumière auxiliaires (9) et la lentille (12),
**caractérisé** :
**en ce qu'**une pluralité de sources de lumière auxiliaires (9) sont disposées afin d'être regroupées latéralement sur une rangée sur une surface d'extrémité de la plaque de base (5),
**en ce que** les éléments de guidage de lumière (7) sont des éléments longs ayant une section transversale rectangulaire agencée en correspondance avec les sources de lumière auxiliaires (9) respectives et sont disposées dans une direction orthogonale par rapport à la plaque de base (5), et
**en ce que** des encoches (8) qui reflètent une lumière de rayonnement des sources de lumière auxiliaires (9) dans la direction longitudinale des éléments de guidage de lumière (7) sont formées dans les éléments de guidage de lumière (7) du côté avant de la carrosserie de véhicule des positions correspondant aux sources de lumière auxiliaires (9), lorsque le phare (1) est installé sur le véhicule.

2. Phare pour un véhicule selon la revendication 1, dans lequel :
la lentille (12) est configurée pour avoir une surface incurvée, et une surface d'extrémité avant (5F) de la plaque de base (5) et les éléments de guidage de lumière (7) sont respectivement formés afin de s'incurver pour correspondre à la lentille (12).

3. Phare pour un véhicule selon l'une quelconque des revendications 1 à 2, dans lequel :
les sources de lumière de phare (20, 21) comprennent une diode électroluminescente (20) pour le feu de croisement et une diode électroluminescente (21) pour le feu de route et sont disposées sur un côté de surface (5U) et de l'autre côté de surface (5L) de la plaque de base (5) respectivement, et
des couvercles de protection (6, 11) qui empêchent la lumière de rayonnement de la diode électroluminescente (20) pour le feu de croisement et la diode électroluminescente (21) pour le feu de route de fuir directement vers le côté avant de la carrosserie de véhicule, sont agencés du côté avant de la carrosserie de véhicule de la diode électroluminescente (20) pour le feu de croisement et de la diode électroluminescente (21) pour le feu de route, lorsque le phare (1) est installé sur le véhicule.
